# EUROPEAN PATENT APPLICATION

(11) **EP 0 787 737 A1**
(43) Date of publication of application: **06.08.1997**
(21) Application number: 97300519.2
(22) Date of filing: 28.01.1997
(51) Int. Cl.: C07F 7/08, C07F 7/12

(54) **Disubstituted palladium catalysts for reacting organic halides with disilanes**

(30) Priority: 31.01.1996 US 593317
(71) Applicant: DOW CORNING CORPORATION, Midland Michigan 48686-0994 (US)
(72) Inventor: Bank, Howard Marvin, Freeland, Michigan 48623 (US); Naasz, Brian Michael, DeWitt, Michigan 48820 (US); Nguyen, Binh Thanh, Midland, Michigan 48640 (US)
(74) Representative: Kyle, Diana

(57) **Abstract**

A process is described for reacting organic halides with disilanes to form monosilanes. The process uses disubstituted palladium compounds as catalysts. This process is especially useful for reacting alkenyl chlorides, such as allyl chloride, with disilanes to form monosilanes having alkenyl substitution. Our process is also useful for converting the high-boiling disilane fraction, resulting from the direct process for forming organosilanes, into more useful monosilanes.

## Description

The present invention is a process for reacting organic halides with disilanes to form monosilanes. The process uses disubstituted palladium compounds as catalysts. This process is especially useful for reacting alkenyl chlorides, such as allyl chloride, with disilanes to form monosilanes having alkenyl substitution. Our invention is also useful for converting the high-boiling disilane fraction, resulting from the direct process for forming organosilanes, into more useful monosilanes.

The primary commercial method for producing organosilanes involves the reaction of an organic halide with elemental silicon. After the desired organosilanes are recovered from the product mixture by distillation, there remains a high-boiling residue which comprises, among other components, disilanes. Since these disilanes have little commercial value, it is desirable to convert them to more useful monosilanes. The present invention converts disilanes to monosilanes by contact with an organic halide in the presence of a disubstituted palladium catalyst. In our process, the Si-Si bond of the disilane is broken resulting in the formation of two monosilanes, with the organic group of the organic halide substituting on one of the silicon atoms and the halogen group of the organic halide substituting on the other silicon atom.

U.S. Patent 3,772,347 discloses the use of palladium/phosphine compounds as catalysts for the reaction of disilanes and organic halides to form monosilanes. Such catalysts are useful, for example, for the reaction of hexachlorodisilane with allyl chloride to yield allyltrichlorosilane.

Eaborn et al., J. Organometallic Chem. 225:331-341 (1982) describe the reactions of a range of organic halides with hexamethyldisilane or hexachlorodisilane in toluene in the presence of a palladium catalyst containing phosphine ligands.

The present invention is a process which comprises contacting a mixture comprising a disilane described by formula R¹ ₙSi₂Cl₆₋ₙ and an organic halide described by formula R¹X with a disubstituted palladium catalyst described by formula PdR² ₂ or PdX₂ at a temperature within a range of 100 to 250°C., where each R¹ is an independently selected monovalent hydrocarbon radical comprising one to 18 carbon atoms, each R² is an independently selected monovalent radical selected from saturated linear or saturated branched monovalent hydrocarbon radicals comprising one to 18 carbons atoms, aryls and oxo carboxyls; each X is independently selected from chlorine or bromine atoms and n=0 to 6.

Contact of the mixture with the disubstituted palladium catalyst is effected in any standard pressurizable reactor suitable for contact with halosilanes. The process may be run as a batch, semi-continuous or continuous process.

The mixture of the present process comprises disilanes described by formula R¹ ₙSi₂Cl₆₋ₙ, where each R¹ is an independently selected monovalent hydrocarbon radical comprising one to 18 carbon atoms and n=0 to 6. R¹ is, for example, an alkyl such as methyl, ethyl, propyl and tert-butyl; cycloalkyl such as cyclopentyl or cyclohexyl; an alkenyl such as vinyl, allyl and hexenyl; and an aryl such as phenyl, tolyl and naphthyl. Preferred is when R¹ is methyl. The value n can be any value from zero to six. It is preferred that n be a value within a range of two to six. Most preferred is when n is six. A preferred disilane for use in the present process is hexamethyldisilane. The present process can also be used to convert a mixture of disilanes into monosilanes.

Further, the present process is useful for converting a high-boiling disilane fraction, resulting from the reaction of an organic halide with elemental silicon, to more useful monosilanes. In a process reacting an organic halide with elemental silicon, the reaction is conducted at a temperature of 300 to 350°C. in the presence of suitable catalysts, gaseous product, excess feed components and fine particulates are continuously removed. The removed materials are subsequently distilled to recover monosilanes, leaving a "high-boiling fraction." A preferred high-boiling fraction for use in our process is one with a boiling point above 70°C., that results from the distillation of monosilanes obtained by the direct process reaction of methyl chloride with elemental silicon. A typical composition for such a high-boiling fraction comprises 50-60 weight percent disilanes. The composition of a high-boiling fraction useful in our claimed process is further described, for example, in U.S. Patent 5,430,168. In some instances, it may be desirable to pre-treat the high-boiling fraction by a process such as filtration to remove particulates.

In addition to disilanes, the mixture of the present process comprises an organic halide described by formula R1X, where R1 is as described above and X is a bromine or chlorine atom. It is preferred that R¹ be an alkenyl radical. It is preferred that X be chlorine. The preferred organic halide for use in this process is allyl chloride.

The mole ratio of organic halide to disilane is not critical to the present process and can be varied from 0.1:1 to 10:1. However, it is preferred that the mole ratio of organic halide to disilane be at least 1:1. Even more preferred is when the organic halide is present in a slight to moderate stoichiometric excess, that is within a range of 1:1 to 3:1.

The mixture comprising the disilane and organic halide is contacted with a disubstituted palladium catalyst described by formula PdR² ₂ or PdX₂, where each R² is an independently selected monovalent radical selected from a group consisting of saturated linear or saturated branched, monovalent hydrocarbon radicals comprising one to 18 carbon atoms, aryls and oxo carboxyls. Each X is independently selected from chlorine or bromine atoms. R² is an alkyl radical such as methyl, ethyl, propyl, tert-butyl and hexyl; a cycloalkyl such as cyclopentyl or cyclohexyl; an aryl such as phenyl, tolyl and naphthyl; or an oxo carboxyl such as glyoxyloyl, pyruvoyl and acetoacetyl. Preferred is when R² is acetoacetyl. Preferred is when X is chlorine atom. A preferred disubstituted palladium catalyst is selected from palladium dichloride or bis-acetoacetyl palladium.

The concentration of catalyst in the present process, based upon the weight of elemental palladium, can be within a range of 10 ppm to 2 X 105 ppm of palladium, based upon the total weight of the mixture. Preferred is when the catalyst concentration is within a range of 100 to 10,000 ppm palladium on the same basis. Most preferred is when the catalyst concentration is within a range of 100 ppm to 1,000 ppm palladium.

The present process is conducted at a temperature within a range of 100 to 250°C. Preferred is when the process is conducted within a range of 150 to 200°C.

The following examples are provided to illustrate the present invention. The reactions reported in the examples were conducted in sealed Pyrex™ glass tubes. A reaction mixture as described in each example was placed in the glass tube and cooled in a isopropyl alcohol (IPA)/dry ice bath. The tube was then heat sealed and heated to the temperature and time described for each example. After the reaction period, the contents of the tube were cooled and analyzed by gas chromatography using a flame ionization detector (GC-FID). The results are reported as the area percent (area %) under the GC-FID trace. In the examples, Me is methyl and AcAc is acetoacetyl.

### Example 1 (Reference example)

The reaction mixture comprised 0.43 g (0.003 mole) of Me₃SiSiMe₃ and 0.3 g (0.0039 mole) of allyl chloride. The mixture was heated at 150°C. for 21 hours, then cooled and analyzed by GC-FID. The analysis indicated the presence of 12 area % of Me₃SiSiMe₃, 12 area % of allyl chloride, 47 area % of allylSiMe₃ and 25 area % of Me₃SiCl.

### Example 2

The reaction mixture comprised 0.43 g of Me₃SiSiMe₃, 0.3 g of allyl chloride and 0.003 g of Pd(AcAc)₂. The mixture was heated at 150°C. for 21 hours, then cooled and analyzed by GC-FID. The analysis indicated the presence of no Me₃SiSiMe₃, 4.8 area % allyl chloride, 59.3 area % allylSiMe₃ and 31.3 area % Me₃SiCl.

### Example 3

The reaction mixture comprised 0.43 g of Me₃SiSiMe₃, 0.3 g of allyl chloride and 0.004 g of PdCl₂. The mixture was heated at 150°C. for 21 hours, then cooled and analyzed by GC-FID. The analysis indicated the presence of no Me₃SiSiMe₃, 3.5 area % allyl chloride, 60.2 area % allylSiMe₃ and 31.9 area % Me₃SiCl.

### Example 4 (Reference example)

The reaction mixture comprised 0.56 g (0.003 mole) of Me₃SiSiMeCl₂ and 0.3 g (.0039 mole) of allyl chloride. The mixture was heated at 150°C, for 48 hours, then cooled and analyzed by GC-FID. The analysis showed no reaction had occurred.

### Example 5

The reaction mixture comprised 0.56 g of Me₃SiSiMeCl₂, 0.3 g of allyl chloride and 0.0026 g of Pd(AcAc)₂, The mixture was heated at 150°C. for 15 hours, then cooled and analyzed by GC-FID. The analysis indicated the presence of no Me₃SiSimeCl₂, 10.2 area % allyl chloride, 41.7 area % allylSiMeCl₂, 38.3 area % Me₃SiCl and 0.8 area % allylSiMe₃.

### Example 6 (Reference example)

The reaction mixture comprised 0.68 g (0.003 mole) of Cl₂MeSiSiMeCl₂ and 0.3 g (0.0039 mole) of allyl chloride. The mixture was heated at 200°C. for 17 hours, then cooled and analyzed by GC-FID. The analysis indicated the presence of 17.2 area %.Cl₂MeSiSiMeCl₂, 20.2 area % allyl chloride, 31.9 area % allylSiMeCl₂ and 12 area % of MeSiCl₃.

### Example 7

The reaction mixture comprised 0.68 g of Cl₂MeSiSiMeCl₂, 0.3 g of allyl chloride and 0.0035 g of PdCl₂. The mixture was heated at 200°C. for 17 hours, then cooled and analyzed by GC-FID. The analysis indicated the presence of no MeCl₂SiSiMeCl₂, 0.4 area % allyl chloride, 48 area % allylSiMeCl₂ and 25 area % MeSiCl₃.

### Example 8

The reaction mixture comprised 0.68 g of Cl₂MeSiSiMeCl₂, 0.3 g of allyl chloride and 0.0032 g of Pd(AcAc)₂. The mixture was heated at 200°C. for 17 hours, then cooled and analyzed by GC-FID. The analysis indicated the presence of no Cl₂MeSiSiMeCl₂, 3.7 area % allyl chloride, 50 area % allylSiMeCl₂ and 23 area % MeSiCl₃.

### Example 9 (Reference example)

The reaction mixture comprised 0.55 g of a high-boiling (>70°C.) distillation fraction resulting from the reaction of methyl chloride with elemental silicon and 0.3 g (0.0039 mole) of allyl chloride. Major disilane components present in the high-boiling fraction, as determined by GC-FID, were 24.7 area % Cl₂MeSiSiMeCl₂, 25.4 area percent Me₂ClSiSiMeCl₂, 11.6 area % Me₂ClSiSiMe₂Cl and 2.8 area % Me₃SiSiMeCl₂. The mixture was heated at 200°C. for 17 hours, then cooled and analyzed by GC-FID. The analysis indicated the presence of 6 area % disilanes, 19.6 area % allyl chloride, 23 area % allylSiCl₂Me and 5.9 area % of allylSiMe₂Cl.

### Example 10

The reaction mixture comprised 0.55 g of a high-boiling fraction as described in Example 9, 0.3 g of allyl chloride and 0.0038 g of Pd(AcAc)₂. The mixture was heated at 200°C. for 17 hours, then cooled and analyzed by GC-FID. The analysis indicated the presence of no disilane, 1.2 area % allyl chloride, 16 area % allylSiMeCl₂ and 1.2 area % allylSiMe₂Cl.

### Example 11

The reaction mixture comprised 0.55 g of a high-boiling fraction as described in Example 9, 0.3 g of allyl chloride and 0.0038 g of PdCl₂. The mixture was heated at 200°C. for 17 hours, then cooled and analyzed by GC-FID. The analysis indicated the presence of no disilane, no area % allyl chloride, 18 area % allylSiMeCl₂ and 1 area % allylSiMe₂Cl.

## Claims

1. A process for forming monosilanes from disilanes, the process comprising contacting a mixture comprising a disilane described by formula R¹ ₙSi₂Cl₆₋ₙ and an organic halide described by formula R¹X with a disubstituted palladium catalyst described by formula PdR² ₂ or PdX₂ at a temperature within a range of 100 to 250°C., where each R1 is an independently selected monovalent hydrocarbon radical comprising one to 18 carbon atoms, each R² is an independently selected monovalent radical selected from saturated linear or saturated branched hydrocarbon radicals comprising one to 18 carbons atoms, aryls and oxo carboxyls; each X is independently selected from chlorine or bromine atom and n=0 to 6.

2. A process according to claim 1 where the disilane is hexamethyldisilane.

3. A process according to claim 1 where the mixture comprises a high-boiling fraction resulting from the distillation of monosilanes, derived by the reaction product of methyl chloride with elemental silicon at a temperature of 300 to 350°C., where the high-boiling fraction contains the disilane.

4. A process according to claim 1 where the organic halide is allyl chloride.

5. A process according to claim 1 where the mole ratio of organic halide to disilane in the mixture is within a range of 0.1:1 to 10:1.

6. A process according to claim 1 where the disubstituted palladium catalyst is selected from palladium dichloride or bis-acetoacetyl palladium.

7. A process according to claim 1 where the concentration of palladium in the mixture is within a range of 10 ppm to 2 X 105 ppm.
